# FASCICULE DE BREVET EUROPEEN

(11) **EP 2 767 020 B1**
(45) Date de publication et mention de la délivrance du brevet: **04.03.2020**
(21) Numéro de dépôt: 12769139.2
(22) Date de dépôt: 09.10.2012
(51) Int. Cl.: H04L 1/00, H04L 5/00

(54) **PROCEDE ET SYSTEME DE COMMUNICATION UTILISANT DES SCHEMAS DE MODULATION ET DE CODAGE DYNAMIQUES SUR DES CANAUX DE COMMUNICATION HF LARGE BANDE**
KOMMUNIKATIONSVERFAHREN UND -SYSTEM MIT DYNAMISCHER MODULATION UND KODIERUNGSSCHEMATA AUF BREITBAND-HF-KOMMUNIKATIONSKANÄLEN
METHOD AND SYSTEM OF COMMUNICATION USING DYNAMIC MODULATION AND CODING SCHEMES ON WIDE BAND HF COMMUNICATION CHANNELS

(30) Priorité: 10.10.2011 FR 1103083
(43) Date de publication de la demande: 20.08.2014
(73) Titulaire: THALES, 92400 Courbevoie (FR)
(72) Inventeur: LAMY-BERGOT, Catherine, F-92622 Cedex Gennevilliers (FR); HERRY, Sébastien, F-92622 Cedex Gennevilliers (FR); MARIN, Bertrand, F-92622 Cedex Gennevilliers (FR)
(74) Mandataire: Dudouit, Isabelle
(86) Numéro de dépôt international: PCT/EP2012/069960
(87) Numéro de publication internationale: WO 2013/053703

(56) Documents cités:
- JORGENSON M B ET AL: "Meeting military requirements for increased data rates at hf", MILCOM 2000. 21ST CENTURY MILITARY COMMUNICATIONS CONFERENCE PROCEEDIN GS 22-25 OCTOBER 2000, PISCATAWAY, NJ, USA,IEEE, vol. 2, 22 octobre 2000 (2000-10-22), pages 1149-1153, XP010532080, DOI: 10.1109/MILCOM.2000.904107 ISBN: 978-0-7803-6521-6 cité dans la demande
- TRINDER S E ET AL: "Optimisation of the stanag 5066 ARQ protocol to support high data rate HF communications", MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001; [IEEE MILITARY COMMUNICATIONS CONFERENCE], NEW YORK, NY : IEEE, US, vol. 1, 28 octobre 2001 (2001-10-28), pages 482-486, XP010579059, DOI: 10.1109/MILCOM.2001.985842 ISBN: 978-0-7803-7225-2 cité dans la demande

## Description

L'objet de la présente invention concerne un procédé et un système permettant d'employer dynamiquement des schémas de modulation et de codage différents sur n voies ou canaux distincts d'un système de communication haute fréquence (HF) large bande.

Dans la présente description les mots voie ou canal sont employés indifféremment pour désigner un canal de propagation et de transmission des données. Ces canaux pourront être cumulés pour réaliser une communication large bande.

Les liaisons HF offrent notamment une capacité hors de la ligne de vue ou BLOS qui permet de réaliser des communications à longue, voire très longue distance, sans nécessiter le recours à un satellite.

Le contexte technique de la présente invention se rapporte plus particulièrement à l'utilisation de liens HF à haut débit (par exemple des débits >19,2kb/s) tels que traités dans la demande de brevet déposée par le Demandeur sous le N° FR 10/04650 qui propose de considérer l'emploi d'une pluralité n de canaux ou voies classiques d'une largeur typique de 3 KHz de bande passante.

La capacité de communication à longue distance (en BLOS) des liens HF repose sur la réflexion des ondes HF (qui vont typiquement de 2 à 30MHz) sur les couches de l'ionosphère, couches dont les qualités ne sont pas stables dans le temps et l'espace, ce qui conduit à de fortes variations du canal de propagation. A cette instabilité du canal vient s'ajouter également la présence toujours possible de différents brouilleurs intentionnels ou non, en particulier la nuit où la partie passante du spectre HF est moins grande.

Malgré son instabilité, ce canal présente l'intérêt de transmettre des communications à longue distance sans qu'il soit nécessaire de déployer au préalable une infrastructure compliquée ou coûteuse, à la différence des communications par satellite par exemple. Considérant également sa meilleure furtivité, ceci explique pourquoi les professionnels cherchent à augmenter les débits offerts sur les liens HF. Une solution a été proposée dans la demande de brevet précitée pour considérer l'emploi d'une pluralité n de canaux de 3KHz contigus ou non afin d'aller au-delà et d'offrir des débits utiles plus importants aux utilisateurs de la bande HF.

Les schémas de modulation et codage employés dans certains standards sont de type modulation mono-porteuse avec un schéma de modulation et codage reposant sur une constellation donnée, par exemple la modulation PSK (phase shift keying) ou QAM (Quadrature Amplitude Modulation) et un code correcteur donné, par exemple un code convolutif poinçonné ou non, définissant un débit utile. Dans le cas de l'extension avec bande latérale inférieure ou BLI, deux voies partagent la même modulation numérique, avec répartition bit pair, bit impair sur l'une ou l'autre voie, et donc le même débit utile, le code correcteur étant commun.

Il apparaît ainsi que lorsqu'il existe une pluralité de canaux disponibles et passants répartis dans une bande relativement large, par exemple de 200KHz, et que l'on réalise une émission large bande permettant d'atteindre de hauts débits, supérieurs à 32 kb/s, les différentes voies réparties sur cette large bande pourront ne pas voir les mêmes imperfections du canal de propagation. Typiquement les évanouissements plus connus sous le terme anglo-saxon de fading seront différents, et les brouillages intentionnels ou non différeront.

L'emploi d'un unique schéma de modulation et codage, i.e, une même constellation et un code correcteur identique ou partagé, ne permettra pas d'adapter au mieux des capacités du canal de transmission. Pour réussir à transmettre sur une voie connaissant un fort évanouissement, une solution consiste à diminuer le débit utile sur l'ensemble des voies, y compris celles qui ne présentent pas d'évanouissements forts.

De plus, la généralisation d'une approche telle que celle retenue en BLI ne permet donc pas de lutter efficacement contre la perte d'une voie. En effet, en BLI, la brusque dégradation d'une voie amène au repli vers une communication en mode avec une seule bande utile (dit mode bande latérale supérieure BLU), ce qui pose le problème d'une forte diminution du débit.

Les solutions existantes de l'art antérieur ou leur déclinaison immédiate au cas n voies sont de deux types résumées ci-après.

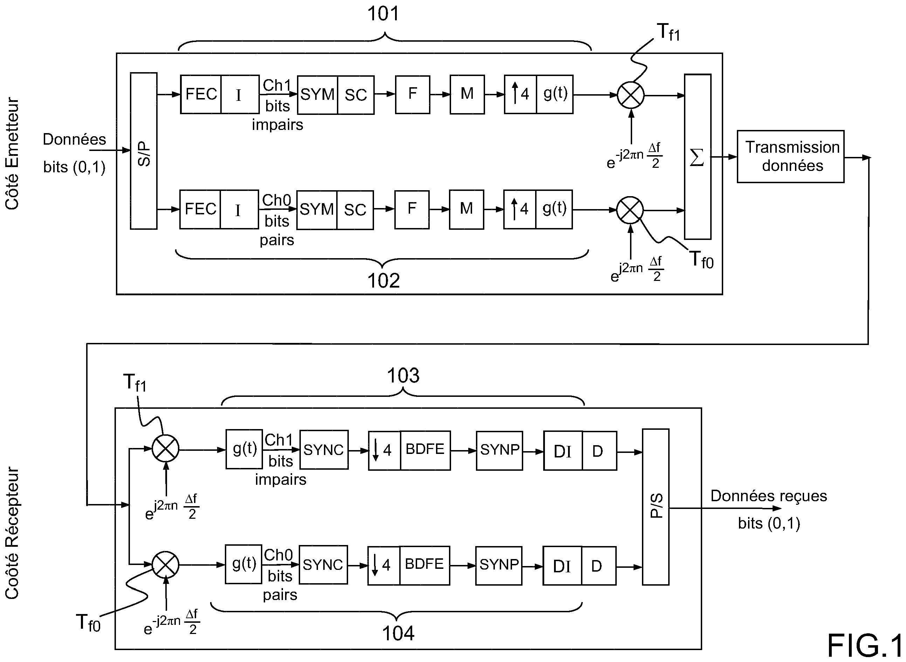

Une première solution schématisée à la figure 1 dans le cas où l'on considère l'emploi de deux canaux simultanément, consiste à traiter séparément les bandes, chacune se voyant typiquement pourvue d'un modem dédié implémentant le standard 3kHz ou 6kHz actuel, avec un passage au traitement large bande uniquement au niveau de la radio, par sommation des différentes porteuses. Les bits impairs seront traités via le canal Ch₁, chaine 101, et les bits pairs via le canal Ch₀, chaine 102. De même en réception, deux voies de traitement 103 et 104 seront utilisées pour traiter les bits de données paires et impaires. Ce type de solution ne permettra pas d'avoir un gain en diversité puisque chaque voie sera de fait traitée séparément. Dans le cas où une seule voie est considérée, avec une approche de type mono-porteuse, un unique schéma de modulation et de codage est employé, et c'est une gestion de type prise de liaison/maintien de liaison (ALE/ALM) qui peut introduire un caractère dynamique. La forme d'onde considérée est généralement autobaud, ce qui signifie que la forme d'onde inclut une capacité de transmission spécifique, communément appelé champ autobaud décodable et démodulable à part, qui indique le schéma de modulation et codage employé pour la suite de la trame (ou jusqu'au prochain champ autobaud), le changement des débits étant télécommandé par les couches supérieures, typiquement par un contrôleur ARQ.

Dans la suite de la description la chaîne de traitement étant connue de l'Homme du métier, les désignations sur les figures représenteront :
au niveau de la chaîne d'émission dans les figures 1, 2 et 3 FEC : le code correcteur d'erreur, I : l'entrelacement, SYM : la formation de symboles, FR : l'étape de mise en trame, M : l'étape de modulation ; l'étape SC sur le schéma pour brouillage ou scrambling.
au niveau de la chaîne de réception dans les figures 1, 2 et 3 : g(t) le filtrage, SYN : la synchronisation, BDFE : l'étape d'égalisation des trames, SYNP : la prédiction de la synchronisation, DI : le désentrelacement, D : le décodage des données.

Ce premier type de solution (avec un traitement codage et modulation séparé voie par voie) ne permet pas de tirer pleinement avantage du fait d'utiliser des voies parallèles, car une telle approche n'amène aucun gain en diversité. C'est d'ailleurs une des raisons pour lesquelles la solution BLI, jumelant deux canaux, telle que proposée dans le standard MIL118-110B connu de l'Homme du métier, introduit une diversité de codage en mettant en commun l'étage de codage correcteur d'erreur et d'entrelacement. Cependant, cette solution n'assure pas la capacité à fonctionner facilement avec une voie bouchée (c'est-à-dire qui n'est pas passante, soit du fait de la propagation elle-même, soit parce que le canal est occupé par un brouilleur intentionnel ou non) lorsque les informations d'entrelacement, de débit, ..., voire de nombre de voies sont variables puisque ces informations nécessaires pour décoder correctement la trame sont partagées entre les différentes voies. Faute de signalisation adéquate (typiquement pour savoir ce qui a été perdu), on est ainsi amené dans le cas (classique) où deux voies sont employées à perdre les données transmises sur les deux canaux lorsque l'un est bouché puisque l'approche standard utilise les deux voies de manière couplée, en utilisant les champs autobaud des deux voies pour définir le même et unique schéma de modulation et codage à employer sur ces deux voies (les bits pairs allant sur le canal 0, les bits impairs sur le canal 1).

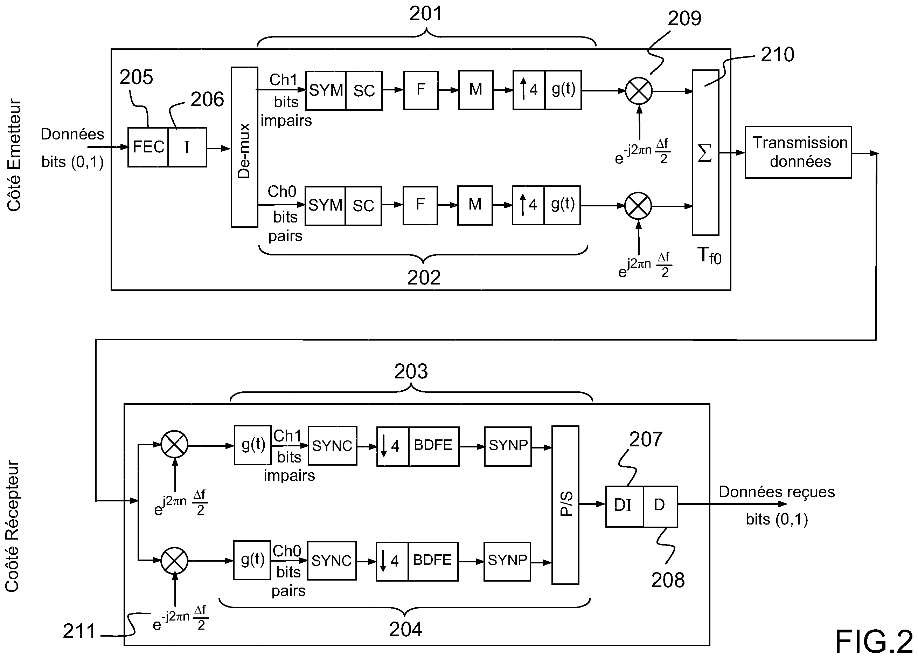

Une deuxième solution, schématisée par la figure 2, consiste à étendre le principe de la BLI en mettant en commun à plusieurs voies Chi, au niveau des chaînes de traitement 201, 202, le code correcteur FEC 205 et l'entrelaceur 206, afin d'offrir un gain en diversité de codage, et en utilisant les mêmes paramètres de modulation sur les différentes voies modem, avant la transposition en fréquence 209 et également la sommation 210 des différentes porteuses dans la radio large bande. Comme susmentionné, cette solution ne permettra pas une adaptation aux différences de conditions de propagation de chacun des canaux considérés. A la réception, on retrouvera la mise en commun pour toutes les voies Ch du désentrelaceur 207 et du décodage 208. Ce second type de solution (extension de la solution BLI) qui consiste à utiliser sur chacune des voies la même modulation tout en partageant le code correcteur et l'entrelaceur, permettra donc de gagner en diversité de codage, contrairement à la première solution mais en revanche rendra le système sensible à la perte d'une des voies, comme dans la solution BLI à deux voies jumelées. En effet, comme dans la solution BLI on s'aperçoit que le partage des informations d'autobaud sur les différentes voies (en BLI le canal 0 transmet l'information de débit, et le canal 1 transmet l'entrelaceur utilisé), qui sont les informations permettant au démodulateur de savoir le mode employé, risque d'entraîner l'impossibilité d'exploiter les différentes voies dès lors que l'une d'entre elle est totalement perdue, par exemple en cas de brouillage. Ce point qui était déjà un problème en mode BLI, et ayant de ce fait conduit à la mise en place d'un mécanisme de retour au cas monovoie BLU en cas de problème, devient problématique dans un contexte où l'on passe à n voies, puisque la probabilité d'avoir un canal bouché augmente fortement. Un tel mécanisme deviendrait donc a priori très instable et peu efficace.

Aucune des deux approches exposées ci-avant ne permet d'utiliser efficacement les n voies en parallèle, et de combiner au moins les différents avantages suivants : amélioration de la transmission grâce à la diversité de codage, protection minimale des informations d'autobaud contre le risque de canaux bouchés, capacité d'avoir des débits différents sur les différentes voies, en fonction de la qualité du canal de propagation considéré.

Le document de M. Jorgenson et al. intitulé « Meeting military requirements for increased data rates at HF », MILCOM 2000, 21st Century Military communications Conférence Proceedings 22-25 octobre 2000, PISCATAWAY, N.J, USA, IEEE, XP010532080 divulgue l'utilisation de modulations indépendantes sur plusieurs (n) canaux dans un même système, avec les mêmes paramètres de modulations pour chaque canal, et un code de correction commun à tous les canaux.

Le document de S. Trinder et al. ayant pour titre « Optimisation of the stanag 5066 ARQ Protocol to support high data rate HF communications », MILCOM 2001, Proceedings. Communications for Network-Centric Opérations: creating the information Force. XP010579059 divulgue un système dans lequel l'ajout de redondance permet d'optimiser le succès de la réception des informations.

Un des problèmes posé est donc de disposer pour une même communication, d'une transmission efficace sur n voies en parallèle, chacune de ces voies voyant un canal de propagation potentiellement différent, et ceci tout en s'assurant que la perte de l'une des voies ou de plusieurs de ces voies ne détruit pas l'ensemble de la communication.

Pour résoudre au moins ce problème, le procédé selon l'invention repose notamment sur la mise en œuvre d'un protocole de choix dynamique des schémas de modulation et de codage (MCS) indépendamment voie par voie dans un contexte de transmission multifréquences adapté au médium HF.

L'objet de la présente invention concerne un procédé de communication dans un système de communication haute fréquence HF large bande comprenant un émetteur d'un signal HF et un récepteur HF, au moins n canaux chₙ de communication, un code correcteur d'erreur FEC et un entrelaceur communs aux n canaux, un moyen permettant de déterminer la qualité Qn de communication offerte par chacun des n canaux chₙ, des données étant transmises sous la forme d'une trame comprenant successivement un préambule de synchronisation initiale et un autobaud suivi d'un bloc de données ledit autobaud pouvant être reconnu par un récepteur bande étroite et par un récepteur large bande, ledit procédé comprenant l'utilisation desdits n canaux en parallèle, partageant un même codeur et un même entrelaceur pour bénéficier d'une protection par diversité fréquentielle, tout en permettant l'usage de modulations différentes sur les n canaux et offrant une redondance sur les informations de codage, entrelacement, modulation par canal, ledit procédé est caractérisé en ce qu'il comporte au moins les étapes suivantes:
- une étape où l'on introduit dans la trame dudit signal HF transmis, après ledit autobaud, un préambule d'extension d'autobaud, ledit préambule d'extension d'autobaud pouvant être reconnu par un récepteur large bande comporte au moins les informations suivantes:
   ∘ une information sur la modulation employée sur chacun des n canaux ch₁, .., chₙ,
   ∘ une information sur l'entrelaceur considéré commun aux n canaux,
   ∘ le code correcteur FEC employé, qui est commun aux n canaux,
   ∘ le nombre de canaux employés (n), ainsi que pour chacun son identifiant id₁, .., idₙ permettant de les ordonner,
- un choix d'une modulation sur un canal n en fonction d'une qualité de liaison dudit canal,
- une opération commune de codage et d'entrelacement sur les n canaux.

Le procédé comporte, par exemple, une étape où l'on insère le préambule d'extension d'autobaud après ledit autobaud lui-même inséré régulièrement dans la trame de données.

Ladite trame comprend, par exemple, une première partie composée de deux tribits suivis d'une mini-probe et d'une seconde partie constituée de n tribits suivi d'une mini-probe, avec ,par exemple, n égal à quatre tribits.

L'information sur la modulation employée est, par exemple, une information de débit.

Un canal de propagation chₖ peut porter l'information de débit des canaux de communication chₖ et chₖ₊₁[n].

Le choix de la modulation utilisée sur un canal se fait, par exemple, en prenant en compte la qualité Qₙ du canal de communication chₙ.

La qualité de liaison d'un canal de communication est, par exemple, estimée en exécutant au moins l'une des étapes suivantes:
- une mesure de puissance du signal reçu, en l'absence de communication, dans chaque canal considéré par le système,
- l'attribution d'une note de qualité à chacun desdits canaux en comparant la valeur mesurée de la puissance à une ou plusieurs valeurs de seuils,
- la sélection des n canaux présentant les valeurs de note les plus élevées.

La largeur d'un canal peut être de 3 kHz ou, plus généralement de t kHz, t étant nombre réel donné.

Selon une variante de mise en œuvre, la structure de trame est définie dans la norme ST4539 ou de la MIL 188-110B et le procédé utilise la valeur '111' du premier tribit de l'autobaud pour signaler au récepteur le fonctionnement en autobaud étendu et au cours du procédé 4 tribits supplémentaires dans le préambule d'extension d'autobaud, soit 8 symboles pour former un autobaud de 137 symboles et constituer ainsi l'autobaud étendu, lesdits tribits étant protégés par un code correcteur.

Il est possible d'utiliser différentes modulations, éventuellement codées, sur les différents canaux considérés.

L'invention concerne aussi un système de communication haute fréquence large bande comportant au moins un émetteur HF et au moins un récepteur HF adaptés à émettre et recevoir un signal de forme d'onde HF, au moins n canaux chₙ de communication, un code correcteur d'erreur et un entrelaceur communs aux n canaux, un module permettant de déterminer une qualité de communication offerte par chacun desdits n canaux, des données étant transmises sous forme d'une trame comportant successivement un préambule de synchronisation et un autobaud suivi d'un bloc de données ledit autobaud pouvant être reconnu par un récepteur large bande et par un récepteur bande étroite, ledit système comportant en outre:
- ledit récepteur HF comporte des moyens pour déterminer n canaux fréquentiels, sur lesquels il va transmettre un signal HF,
- ledit récepteur HF comporte des moyens pour évaluer une qualité Qn de transmission pour chaque canal.
- ledit émetteur HF comporte en outre des moyens d'introduction dans la trame dudit signal HF transmis, après ledit autobaud, d'un préambule d'extension d'autobaud, ledit préambule d'extension d'autobaud pouvant être reconnu par un récepteur large bande comprend au moins les informations suivantes:
   ∘ une information sur la modulation employée sur chacun des n canaux ch₁, .., chₙ,
   ∘ une information sur l'entrelaceur considéré, commun aux n canaux,
   ∘ le code correcteur FEC employé, qui est commun aux n canaux,
   ∘ le nombre de canaux employés (n), ainsi que pour chacun un identifiant idn permettant de les ordonner,
- le système comprenant une voie de retour permettant de remonter l'information sur la qualité du canal vers l'émetteur HF.

Il est également possible de disposer d'un moyen de mesurer la qualité des canaux de communications au niveau de l'émetteur, afin de choisir comme canaux préférés ceux qui sont de bonne qualité pour l'émetteur et le récepteur. Du côté émetteur, cette mesure pourra se faire par une mesure puissance du signal reçu au niveau de l'émetteur, en l'absence de communication, dans chaque canal considéré par le système ou dans le cas où le système fonctionne en mode duplex, par utilisation des niveaux de qualité mesurés lorsque l'émetteur était en mode réception. Dans le cas d'une utilisation en half duplex comme souvent en HF, il est possible de reprendre les informations présentes en réception pour les utiliser aussi en émission.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- la figure 1, un exemple d'architecture d'un système pour l'émission et la réception selon l'art antérieur,
- la figure 2, un deuxième exemple de réalisation de l'art antérieur,
- la figure 3, un exemple de solution mettant en œuvre le procédé selon l'invention comprenant n voies avec des schémas de modulation et codage différents et indépendants,
- les figures 4A et 4B, une structure de trame selon l'art antérieur et une structure de trame intégrant le procédé selon l'invention, et
- la figure 5, un exemple de composition des champs de l'autobaud pour deux modes bas débits.

La méthode et le système proposés dans la présente invention s'appuient sur l'hypothèse que l'on dispose d'un ensemble de n canaux de type classique en HF, par exemple des canaux de 3KHz (pouvant être contigus ou non) et d'une voie de retour capable d'informer le système de la qualité Q du canal de propagation pour chacun des canaux.

Ces conditions sont remplies, par exemple, si l'on suit l'approche décrite dans la proposition d'invention Thales intitulée «Procédé et système de communications adaptatives en bande HF», déposée sous le numéro FR10/04650. Le procédé décrit dans cette demande de brevet permet, notamment, de sélectionner dynamiquement, un ensemble de bandes de fréquences en fonction de la qualité, à un instant donné, de la transmission sur ces bandes de fréquences. Les bandes ne sont pas forcément contigües mais prises dans l'ensemble des fréquences allouées à un utilisateur. Toute autre méthode permettant de disposer de n canaux peut aussi être utilisée. Afin d'obtenir une information sur la qualité Q du canal de propagation, il est par exemple possible d'utiliser la technique décrite dans la demande de brevet précitée. Ainsi, il est possible d'obtenir des informations de qualité correspondant à une puissance de bruit ou à un rapport signal/bruit qui est transmis par le récepteur à l'émetteur, à partir de mesures réalisées en réception, soit sur le rapport signal-à-bruit estimé par exemple sur des symboles pilotes de la trame reçue, soit pour les canaux où il n'y a pas de trafic, par intégration du bruit sur la sous-bande considérée. En pratique, ces valeurs mesurées seront converties en une valeur discrète prise dans un ensemble prédéfini S de valeurs qualifiant la liaison. Par exemple, la puissance du signal reçu est mesurée, en l'absence de transmission dans chaque canal. Cette mesure est effectuée par le récepteur avec un convertisseur analogique-numérique de dynamique et de valeur de saturation connues, non représenté, car ne faisant pas partie de l'objet de la présente invention. La note de qualité de la transmission peut également prendre en compte une valeur de puissance moyenne du signal au cours d'une période de temps passée. Cette puissance moyenne est exploitable uniquement si sa mesure est réalisée sur une période de temps pour laquelle les conditions d'émission et de réception sont comparables avec celles observées pour la mesure de la puissance instantanée du signal. Il est aussi possible de pondérer la mesure de la puissance instantanée du signal, par des allocations préférentielles à différents services. Par exemple, si l'on dispose de fréquences attribuées en propre et d'autres en accès partagé, on pourra favoriser l'utilisation des fréquences en propre. On pourra enfin, dans le cas où l'on dispose également d'un moyen de mesurer la qualité des canaux de communications au niveau de l'émetteur, prendre en compte les mesures de qualité au niveau de l'émetteur, pour favoriser les canaux qui sont également les meilleurs au niveau de l'émetteur. Ceci a notamment un intérêt lorsque le système est opéré en half-duplex, c'est-à-dire que la liaison est utilisée alternativement en émission/réception entre deux sites, puis en réception/émission entre ces deux mêmes sites.

Une fois la qualité de la transmission dans chaque canal établie, le procédé va fixer une ou plusieurs valeurs seuil de comparaison à cette note de qualité au-delà de laquelle le canal est considéré comme perturbé et donc non disponible.

L'exemple qui va être donné afin d'illustrer les caractéristiques techniques mises en œuvre par l'invention concerne deux standards existants pour les communications HF, à savoir la norme Stanag 4539 et la norme MIL STD 110-118B.

La mise en œuvre de la présente invention permet notamment d'obtenir une interopérabilité complète avec les équipements en bande étroite existants dans un mode de fonctionnement BLU ou BLI. Le format de trame sera conservé et la compatibilité avec les champs auto-bauds existant sera respectée.

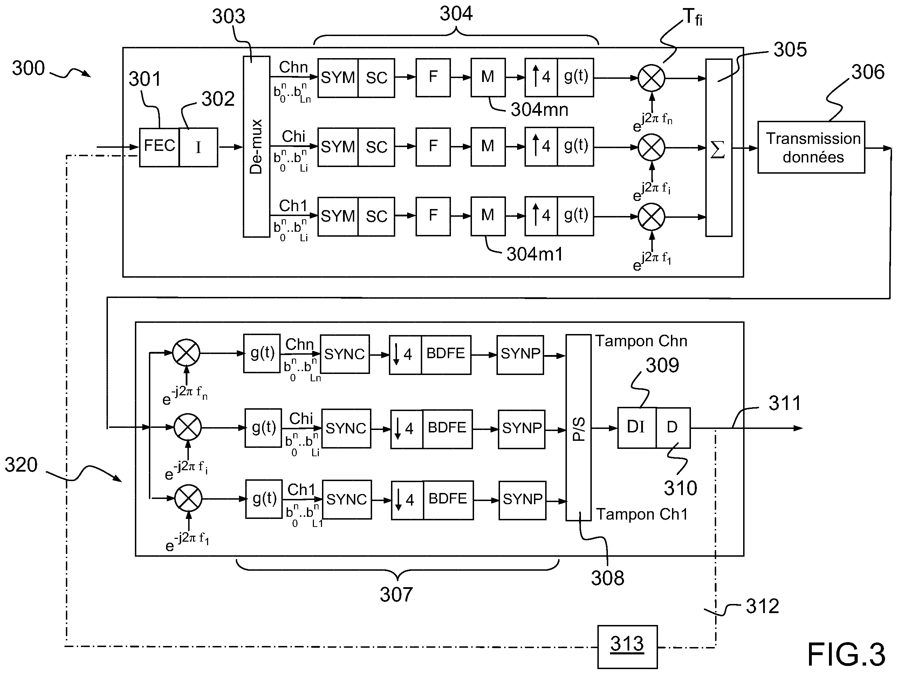

La figure 3 schématise un exemple de système de communication selon l'invention comprenant :
Au niveau de la partie émetteur 300, les données binaires de l'utilisateur {0, 1} passent en premier dans un module de correction 301 FEC, puis dans un entrelaceur 302 avant d'être démultiplexées 303. Les données démultiplexées sont ensuite transmises sur n canaux en parallèle. Les n canaux ou n voies ch₁...chₙ sont, par exemple, des canaux de largeur de 3KHz pouvant être contigus ou non.

Les données après traitement dans la chaîne d'émission 304 comprenant des moyens connus de l'Homme du métier, par exemple, un moyen de formation de symbole, des moyens d'échantillonnage, suivis de moyens de modulation vont ensuite être transposées en fréquence, la fréquence de transposition Tfn étant associée à un canal chₙ, puis vont être sommées 305. La somme résultante va être transmise et il va y avoir propagation 306 du signal par le canal de transmission avant réception sur la partie récepteur 320.

Au niveau de la partie récepteur 320, le signal reçu est dans un premier temps transposé T'fi en fréquence ce qui permet une séparation des données sur les n canaux chₙ, puis les données sont transmises dans une chaîne de traitement 307 qui traite les données sur n voies en parallèle avant de les réassembler au niveau d'un tampon parallèle série 308, puis de transmettre l'ensemble à un désentrelaceur 309 symétrique de l'entrelaceur de la partie émetteur. Après désentrelacement les données sont transmises à un module de décodage correcteur 310 qui fournit des données binaires. Les données binaires ainsi reçues sont ensuite remises au récepteur 311.

Le système comporte aussi une voie de retour 312 et un moyen 313 permettent de déterminer la qualité Qi d'un canal de propagation pour les différents canaux chi possibles pour la transmission. La voie de retour retransmet la qualité Q de chacun des n canaux de propagation chₙ vers l'émetteur.

Le principe même de la séparation en n voies ou canaux qui sont soumis à des canaux de propagation différents et indépendants, entraîne la possibilité d'observer des débits différents et indépendants sur les n canaux, ces débits n'étant donc pas égaux ou fixes.

Sous l'hypothèse précitée de la présence de n canaux et de la qualité Q des n canaux de propagation, le procédé se propose dans l'exemple donné par la suite de garantir la protection de l'autobaud en cas de perte d'une voie, pour éviter de générer une redondance trop coûteuse.

En employant, comme illustré par la figure 3 des modulations indépendantes 304mn sur les n voies (304m1 pour le canal ch₁,...304mn pour le canal chₙ), mais en partageant l'étage de codage correcteur 301 et d'entrelacement 302, le procédé introduit de la diversité de codage, qui permettra de mieux résister aux imperfections du canal (erreurs, pertes, brouillages intentionnels ou non), et également permettra d'adapter au mieux la résistance et l'efficacité de la modulation employée à la qualité de chacune des voies utilisées pour la transmission.

L'exemple donné à titre illustratif est restreint à une application d'un unique code correcteur commun aux différentes voies pour garantir la diversité de codage. Sans sortir du cadre de l'invention, il est toutefois envisageable de prendre en compte différents codes correcteurs comme il sera exposé plus loin dans la description.

L'une des caractéristiques techniques utilisée par le procédé selon l'invention est la présence d'un d'autobaud étendu au niveau de la trame des données, avec capacité de redondance, qui permettra d'offrir la signalisation nécessaire : c'est grâce à cet autobaud étendu que l'on saura reconstituer la correctement les informations manquantes en cas de perte des éléments d'une voie, les données correspondantes non reçues étant alors entrées comme effacées en amont du désentrelaceur 309, pour être désentrelacées puis décodées par le code correcteur qui, dans les limites de son pouvoir de correction, pourra décoder correctement le signal reçu. Ceci impose donc que dans l'autobaud étendu les informations listées ci-après soient transmises de manière redondante :
- une information sur la modulation sur chaque voie ou canal chₙ, l'information pouvant être par exemple, le débit employé,
- l'entrelaceur considéré, commun aux n canaux,
- le code correcteur employé, commun aux n canaux,
- le nombre de voies ou canaux employés (n), ainsi que pour chacun son identifiant idn permettant de les ordonner.

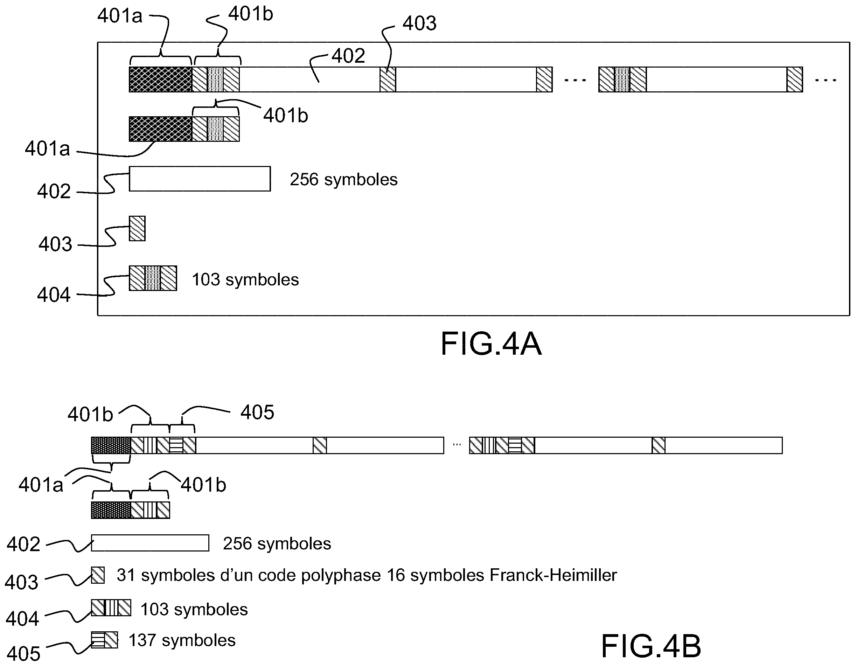

L'introduction de plus d'informations dans l'autobaud se fait, par exemple, en introduisant une extension dans l'autobaud existant, tel qu'il est représenté aux figures 4A, 4B.

Ainsi formée, la trame offre donc les caractéristiques suivantes :
- elle est reconnue par un poste selon l'état de l'art comme une trame standard qu'il n'est pas capable de décoder. Le poste standard continuera donc à scanner le flux à la recherche d'une solution décodable sans risque de passage en erreur,
- elle est reconnue comme une trame d'un format étendu pour les postes intégrant la capacité, avec indication des choix faits en terme de modulation par canal, entrelacement et type de code correcteur pour la trame, ainsi que de nombre de canaux considérés, ainsi que de la numérotation de ces canaux.

Avec une telle information, un poste intégrant la nouvelle capacité est capable de décoder des canaux avec des modulations différentes sur les différents canaux, sait s'adapter à la volée à une modification des modulations employées sur tout ou partie des canaux, sait s'adapter à la volée à une réduction du nombre de canaux ou à une modification de l'ordre des canaux.

A titre d'exemple donné de manière non limitative, dans le cadre de la compatibilité recherchée avec la norme ST4539/MIL 188-110B, pour les débits supérieurs à 3200 b/s, la valeur '111' du premier tribit (ensemble de trois bits) va être utilisée afin de signaler au récepteur ou à l'émetteur du système, le passage du fonctionnement en mode autobaud étendu. En conséquence, un poste émetteur-récepteur standard détectera un mode inconnu et cherchera à se synchroniser sur le préambule suivant, alors qu'un poste large bande saura qu'il lui faut passer en mode étendu et donc interpréter le champ autobaud étendu.

La figure 4A schématise le format d'une structure de trame 400 dans le format compatible de la norme ST4539/MIL 188-110B.

La trame comprend une première partie 401a, 401b qui correspond respectivement à un préambule de synchronisation initiale et un autobaud standard, par exemple de 287 symboles, suivi d'un bloc de données 402 de 256 symboles, d'une mini-probe 403 de 31 symboles et d'un autobaud standard 404 inséré régulièrement dans la trame de 103 symboles.

La figure 4B schématise un exemple d'extension d'autobaud selon l'invention qui consiste, par exemple, à insérer un préambule 405, dans cet exemple constitué de 137 symboles, le préambule 405 étant inséré, par exemple, dans la partie au niveau du préambule de synchronisation (401a, 401b). La trame ainsi étendue garde le format classique. Selon une autre variante de réalisation, le préambule 405 constituant l'extension d'autobaud peut être inséré après l'autobaud standard 404.

L'autobaud étendu selon la présente invention est découpé en deux parties, la première conformément aux standards actuels comporte, par exemple, deux tribits suivis de leur mini-probe, ce qui assure qu'il puisse être démodulé par les systèmes classiques, suivi par une seconde partie constituée de n tribits, suivie d'une mini-probe, avec par exemple n égal à quatre nouveaux tribits. Cette seconde partie est démodulée par l'égaliseur BDFE classique s'appuyant sur l'introduction d'une mini-probe finale identique à celle de l'autobaud classique (31 symboles). Le passage en mode étendu est signalé dans cet exemple par le premier tribit positionné à la valeur "111" dans l'autobaud standard.

Ainsi, un poste compatible de l'extension de l'autobaud, lorsqu'il reçoit un signal va chercher la suite de l'autobaud et l'interpréter. Un poste standard non équipé pour reconnaître l'autobaud étendu, détectera un mode inconnu pour lui et cherchera à accrocher le prochain préambule régulièrement inséré qu'il saura reconnaître.

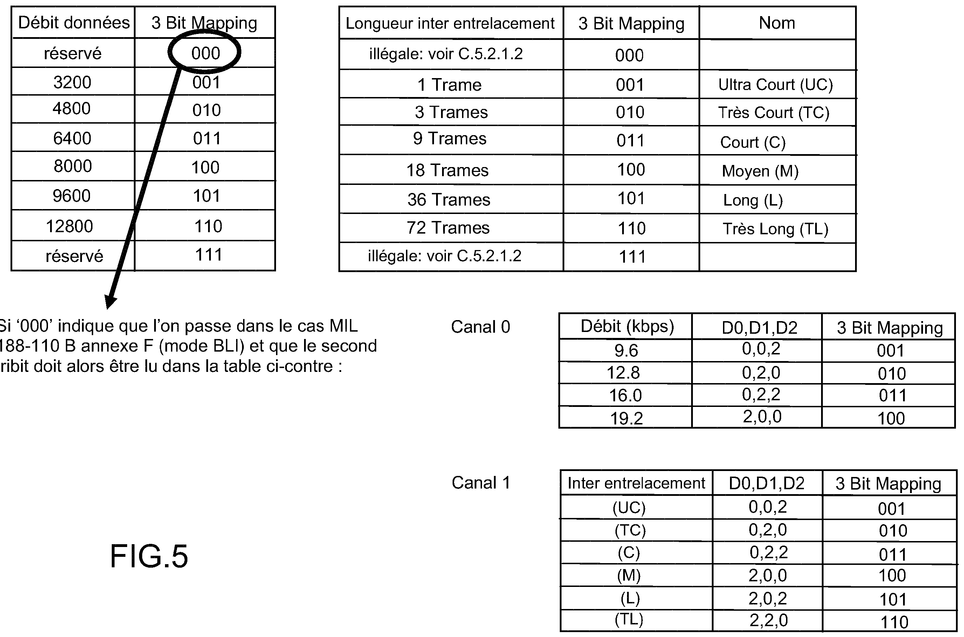

La figure 5, représente un mode de réalisation du procédé selon l'invention compatible des standards précités actuels:
Le procédé va donc émettre sur chaque voie ou canal chₙ:
   - la modulation (homogène à l'information de débit dans les standards actuels), ainsi qu'une seconde information de modulation, correspondant à celle employée sur une autre voie. Afin de pouvoir fournir au moins 10 valeurs de modulations, cette information est codée sur 4 bits : d₀ d₁ d₂ d₃ pour la modulation de la voie, et d₄ d₅ d₆ d₇ pour la modulation de la seconde voie (répétition de l'information initiale transmise sur la voie en question).
   - l'identifiant du canal considéré, codé sur 3 bits : n₀ n₁ n₂,
Le procédé dispose également des informations suivantes redondées par exemple au moins une fois sur l'ensemble des n canaux :
   - l'entrelaceur utilisé, qu'il s'agisse des entrelaceurs des standards susmentionnés ou de nouveaux entrelaceurs obtenus par exemple en utilisant des méthodes connues de l'Homme du métier,
   - le code correcteur employé, FEC, qu'il s'agisse des codes correcteurs des standards susmentionnés ou de nouveaux codeurs obtenus par exemple en utilisant des méthodes connues de l'Homme du métier
   - la valeur du nombre total de canaux (n) utilisés pour transmettre le signal.

Pour ces trois informations, une manière de procéder consiste à utiliser 4 bits : i₀ i₁ i₂ i₃ et à alterner une fois sur trois, pour la transmission des informations d'entrelaceur, de valeur de n, et de code FEC, c'est-à-dire :
Si canal chₖ=0[3], i0 i1 i2 i 3 → nombre de canaux utilisés (n)
Si canal chₖ=1[3], i0 i1 i2 → entrelaceur considéré
Si canal chₖ=2[3], i0 i1 i2 → code correcteur considéré

En ce qui concerne la duplication des informations de débit, il est possible, par exemple, de faire porter par le canal cₖ l'information de débit des canaux chₖ et chₖ₊₁[n].

Ceci amène donc au format d'autobaud suivant :
111 d₀d₁d₂d₃ + n₀n₁ n₂ i₀ i₁ i₂ i₃ d₄d₅d₆d₇,
c'est-à-dire à la définition de 4 tribits supplémentaires (soit 8 symboles D3, D4, D5, D6, D7, D8 protégés par le code de Barker connu de l'Homme du métier par exemple), pour former un autobaud étendu de taille 1+8^{∗}13+1+31=137 symboles.

Ceci conduit aux nouvelles modulations présentées dans les tableaux ci-après, à titre d'exemple :

| **Modulation** | **4bits mapping** |
|---|---|
| illégal | 0000 |
| illégal | 0001 |
| réservé | 0010 |
| réservé | 0011 |
| BPSK | 0100 |
| QPSK | 0101 |
| 8-PSK | 0110 |
| illégal | 0111 |
| illégal | 1000 |
| 16-QAM | 1001 |
| 32-QAM | 1010 |
| 64-QAM | 1011 |
| 128-QAM | 1100 |
| 256-QAM | 1101 |
| illégal | 1110 |
| illégal | 1111 |

| **Canal considéré** | **3 bits mapping** |
|---|---|
| 1 | 000 |
| 2 | 001 |
| 3 | 010 |
| 4 | 011 |
| 5 | 100 |
| 6 | 101 |
| 7 | 110 |
| 8 | 111 |

| **Nombre de canaux** | **4 bits mapping** |
|---|---|
| illégal | 0000 |
| illégal | 0001 |
| 1 | 0010 |
| 2 | 0011 |
| 3 | 0100 |
| 4 | 0101 |
| 5 | 0110 |
| 6 | 0111 |
| 7 | 1000 |
| 8 | 1001 |
| réservé | 1010 |
| réservé | 1011 |
| réservé | 1100 |
| réservé | 1101 |
| illégal | 1110 |
| illégal | 1111 |

| **entrelaceur** | **3 bits mapping** |
|---|---|
| illégal | 000 |
| 1 trame (US) | 001 |
| 3 trames (VS) | 010 |
| 9 trames (S) | 011 |
| 18 trames (M) | 100 |
| 36 trames (L) | 101 |
| 72 trames (VL) | 110 |
| illégal | 111 |

| **FEC** | **3 bits mapping** |
|---|---|
| illégal | 000 |
| CC ½ perforé : R=¾ | 001 |
| CC ½ non perforé | 010 |
| réservé | 011 |
| réservé | 100 |
| réservé | 101 |
| réservé | 110 |
| illégal | 111 |

On notera que certaines valeurs dans les tables fournies sont déclarées illégales pour éviter tout risque de confusion avec le motif mini-probe, de la même façon que certaines valeurs sont interdites dans le standard de référence pour les tribits de définition de l'entrelaceur en mode BLU. D'autres valeurs sont ici présentées comme réservées pour des attributions à définir en fonction des besoins.

Selon le procédé, du fait de la possibilité offerte de changer de code correcteur d'erreur FEC, et de ne pas utiliser par exemple uniquement le code convolutif ½ poinçonné à un rendement ¾ dans la version BLI, il est donc effectivement proposé de véhiculer l'information de modulation utilisée sur les voies, au lieu du débit utile traditionnellement transmis dans l'autobaud étendu. Cette modulation pourra de plus en effet éventuellement être codée, ce qui signifie qu'elle peut avoir une capacité de répétition ou codage pour renforcer sa résistance, ou pourra simplement être employée avec le code correcteur FEC commun, de rendement égale ou différent du rendement standard BLI.

L'exemple explicité ci-dessus peut sans sortir du cadre de l'invention être mis en œuvre dans tout système de communication possédant plusieurs voies, n canaux, un moyen permettant de connaître la qualité des canaux de communication, et une structure de trame comprenant un ensemble de bits non utilisés afin d'introduire au moins les informations suivantes:
- Le débit employé sur chaque canal ch₁, .., chₙ,
- L'entrelaceur considéré, commun aux n canaux,
- Le code correcteur employé, commun aux n canaux,
- Le nombre de canaux employés (n), ainsi que pour chacun son identifiant id₁, .., idₙ permettant de les ordonner.
De manière plus générale, la mise en œuvre du procédé selon l'invention s'adresse à une structure de trame composée d'une première partie 401 = 401a, 401b comprenant des informations de synchronisation et d'autobaud, suivie d'un bloc de données 402, puis d'une partie 403 comprenant le code correcteur d'erreur.

L'autobaud étendu consiste à introduire au niveau de la partie 401a, 401b comprenant des informations de synchronisation, un ensemble d'informations 405 correspondant à un nombre de symboles, cette seconde partie étant démodulée par l'égaliseur BDFE classique s'appuyant sur l'introduction d'une mini-probe finale identique à celle de l'autobaud classique (31 symboles). L'autobaud étendu selon la présente invention peut être vu comme un autobaud standard et une extension 405.

L'invention présente notamment les avantages suivants. Elle permet de gérer indépendamment les différentes voies et ainsi d'améliorer la probabilité d'avoir adapté la modulation et le codage aux conditions du canal de propagation. Ceci permet d'obtenir une portée et une probabilité d'établissement de la communication souhaitées selon le système de communication.

La proposition d'autobaud étendu selon l'invention permet donc de ne pas perturber les postes actuels, mais également d'introduire une capacité de redondance pour permettre le décodage avec succès de la trame même en cas de perte d'un canal (ou de plusieurs non contigus), mais aussi de permettre un emploi de modulations différentes selon les canaux.

Le procédé selon l'invention permet de bénéficier d'une diversité de codage grâce à l'usage d'un unique étage de codage correcteur et d'entrelacement entres les différentes voies, de pouvoir résister à au moins un canal bouché grâce à de la redondance spécifique introduite dans le mécanisme d'autobaud partagé étendu, et elle permet donc d'éviter la rupture de la communication en cas de dégradation rapide (évanouissement, brouillage) d'un ou plusieurs canaux grâce au partage des informations sur l'ensemble des voies.

Le procédé permet de faire varier la modulation (éventuellement codée) sur chacune des voies, et ainsi de proposer plus de flexibilité d'adaptation ou d'offrir un point de fonctionnement différent pour les différentes voies du système de communication.

## Revendications

1. Procédé de communication dans un système de communication haute fréquence HF large bande comprenant un émetteur (300) d'un signal HF et un récepteur HF (320), au moins n canaux chₙ de communication, un code correcteur d'erreur FEC (301) et un entrelaceur (302) communs aux n canaux, un moyen (312, 313) permettant de déterminer la qualité Qn de communication offerte par chacun des n canaux chₙ, des données étant transmises sous forme d'une trame comprenant successivement un préambule de synchronisation initiale (401a, 401b) et un autobaud suivi d'un bloc de données (402), ledit autobaud pouvant être reconnu par un récepteur bande étroite et par un récepteur large bande, ledit procédé comprenant l'utilisation desdits n canaux en parallèle, partageant un même codeur et un même entrelaceur pour bénéficier d'une protection par diversité fréquentielle, tout en permettant l'usage de modulations différentes sur les n canaux et offrant une redondance sur les informations de codage, entrelacement et modulation par canal, ledit procédé comportant au moins les étapes suivantes :
• une étape où l'on introduit dans la trame dudit signal HF transmis, après ledit autobaud, un préambule d'extension d'autobaud, ledit préambule d'extension d'autobaud pouvant être reconnu par un récepteur large bande comporte au moins les informations suivantes:
∘ une information sur la modulation employée sur chacun des n canaux ch₁, .., chₙ,
∘ une information sur l'entrelaceur considéré commun aux n canaux,
∘ le code correcteur FEC employé, qui est commun aux n canaux,
∘ le nombre de canaux employés n, ainsi que pour chacun un identifiant id₁, .., idₙ permettant de les ordonner,
• un choix d'une modulation (304mn) sur un canal n en fonction d'une qualité de liaison dudit canal,
• une opération commune de codage et d'entrelacement (312, 313) sur les n canaux..

2. Procédé selon la revendication 1 **caractérisé en ce qu'**il comporte une étape où l'on insère le préambule (405) d'extension d'autobaud après ledit autobaud (404) inséré lui-même régulièrement dans la trame de données.

3. Procédé selon la revendication 1 **caractérisé en ce que** ladite trame comprend une première partie composée de deux tribits suivis d'une mini-probe et d'une seconde partie constituée de n tribits suivi d'une mini-probe.

4. Procédé selon la revendication 1 **caractérisé en ce que** l'information sur la modulation employée est une information de débit.

5. Procédé selon la revendication 1 **caractérisé en ce qu'**un canal de propagation chₖ porte l'information de débit des canaux de communication chₖ et chₖ₊₁[n].

6. Procédé selon la revendication 1 **caractérisé en ce que** la modulation utilisée sur une voie se fait en prenant en compte une qualité Qₙ du canal de communication chₙ.

7. Procédé selon la revendication 6 **caractérisé en ce que** la qualité de liaison d'un canal de communication est estimée en exécutant au moins l'une des étapes suivantes:
• une mesure de puissance d'un signal reçu, en l'absence de communication, dans chaque canal considéré par le système,
• l'attribution d'une note de qualité à chacun desdits canaux en comparant une valeur mesurée de la puissance à une ou plusieurs valeurs de seuils,
• la sélection des n canaux présentant les valeurs de note les plus élevées.

8. Procédé selon l'une des revendications 6 ou 7 **caractérisé en ce que** la qualité de liaison d'un canal de communication est déterminée au niveau de l'émetteur (300).

9. Procédé selon l'une des revendications précédentes **caractérisé en ce qu'**une largeur d'un canal est de 3 KHz, 6KHz ou t kHz, t étant nombre réel donné.

10. Procédé selon la revendication 1 **caractérisé en ce qu'**une trame est définie dans la norme ST4539 ou de la MIL 188-110B et **en ce que** le procédé utilise la valeur '111' du premier tribit de l'autobaud pour signaler au récepteur le fonctionnement en autobaud étendu et **en ce que** l'on définit 4 tribits supplémentaires dans le préambule d'extension d'autobaud, soit 8 symboles pour former un autobaud de 137 symboles et constituer ainsi l'autobaud étendu, lesdits tribits étant protégés par un code correcteur.

11. Procédé selon l'une des revendications 1 à 10 **caractérisé en ce que** l'on utilise différentes modulations codées, en fonction d'un canal considéré.

12. Système de communication haute fréquence HF large bande comportant au moins un émetteur HF (300) et au moins un récepteur HF (320) adaptés à émettre et recevoir un signal de forme d'onde HF, au moins n canaux chₙ de communication, un code correcteur d'erreur (301) et un entrelaceur (302) communs aux n canaux, un module (312, 313) permettant de déterminer une qualité de communication offerte par chacun desdits n canaux, des données étant transmises sous forme d'une trame comportant successivement un préambule de synchronisation initiale (401a, 401b) et un autobaud suivi d'un bloc de données (402), ledit autobaud pouvant être reconnu par un récepteur large bande et par un récepteur bande étroite, ledit système comportant en outre:
∘ ledit récepteur HF (320) comporte des moyens pour déterminer n canaux fréquentiels, sur lesquels il va transmettre un signal HF,
∘ ledit récepteur HF comporte des moyens pour évaluer une qualité de transmission pour chaque canal,
∘ ledit émetteur HF (300) comporte en outre des moyens d'introduction dans la trame dudit signal HF transmis, après ledit autobaud, d'un préambule d'extension d'autobaud, ledit préambule d'extension d'autobaud pouvant être reconnu par un récepteur large bande comprend au moins les informations suivantes:
∘ une information sur la modulation employée sur chacun des n canaux ch₁, .., chₙ,
∘ une information sur l'entrelaceur considéré, commun aux n canaux,
∘ le code correcteur FEC employé, qui est commun aux n canaux,
∘ le nombre de canaux employés n, ainsi que pour chacun un identifiant idn permettant de les ordonner,
.le système comprenant une voie de retour (312) permettant de remonter l'information sur une qualité du canal vers l'émetteur HF.

## Patentansprüche

1. Kommunikationsverfahren in einem Breitband-Hochfrequenz-HF-Kommunikationssystem, beinhaltend einen Sender (300) eines HF-Signals und einen HF-Empfänger (320), mindestens n Kommunikationskanäle chₙ, einen Fehlerkorrekturcode FEC (301) und einen Verschachteler (302), welche den n Kanälen gemeinsam sind, ein Mittel (312, 313) zum Bestimmen der Kommunikationsqualität Qn, die von jedem der n chₙ-Kanäle geboten wird, wobei die Daten in Form eines Rahmens übertragen werden, welcher nacheinander eine anfängliche Synchronisationspräambel (401a, 401b) und ein von einem Datenblock (402) gefolgtes Autobaud beinhaltet, wobei das Autobaud durch einen Schmalband-Empfänger und durch einen Breitband-Empfänger erkannt werden kann, wobei das Verfahren den parallelen Einsatz der n Kanäle beinhaltet, welche sich einen gleichen Codierer und einen gleichen Verschachteler teilen, um einen Schutz anhand von Frequenzdiversität zu genießen und dabei gleichzeitig die Verwendung unterschiedlicher Modulationen auf den n Kanälen zuzulassen und eine Redundanz bei den Codierungs-Informationen, bei der Verschachtelung und der Modulation pro Kanal zu bieten, wobei das Verfahren mindestens folgende Schritte beinhaltet:
• einen Schritt, bei welchem man in den Rahmen des übertragenen HF-Signals nach dem Autobaud eine Autobaud-Erweiterungspräambel einbringt, wobei die Autobaud-Erweiterungspräambel, welche von einem Breitband-Empfänger erkannt werden kann, mindestens folgende Informationen beinhaltet:
∘ eine Information über die an jedem der n Kanäle ch₁, .., chₙ verwendete Modulation,
∘ eine Information über den als den n Kanälen gemeinsam betrachteten Verschachteler,
∘ den verwendeten Korrekturcode FEC, der den n Kanälen gemeinsam ist,
∘ die Anzahl an verwendeten Kanälen n sowie für jeden davon eine Kennung id₁, .., idₙ, die es ermöglicht, diese zu ordnen,
• eine Wahl einer Modulation (304mn) auf einem Kanal n angesichts einer Verbindungsqualität des Kanals,
• einen gemeinsamen Kodierungs- und Verschachtelungsschritt (312, 313) auf den n Kanälen.

2. Verfahren nach Anspruch 1, **dadurch gekennzeichnet, dass** es einen Schritt enthält, bei welchem man die Autobaud-Erweiterungspräambel (405) nach dem Autobaud (404) einfügt, welches selbst regelmäßig in den Datenrahmen eingefügt wird.

3. Verfahren nach Anspruch 1, **dadurch gekennzeichnet, dass** der Rahmen einen ersten Abschnitt, welcher aus zwei Tribits, gefolgt von einer Mini-Probe, besteht, und einen zweiten Abschnitt, gebildet aus n Tribits, gefolgt von einer Mini-Probe, enthält.

4. Verfahren nach Anspruch 1, **dadurch gekennzeichnet, dass** die Information über die verwendete Modulation eine Rateninformation ist.

5. Verfahren nach Anspruch 1, **dadurch gekennzeichnet, dass** ein Fortpflanzungskanal chₖ Rateninformation der Kommunikationskanäle chₖ und chₖ₊₁ [n] transportiert.

6. Verfahren nach Anspruch 1, **dadurch gekennzeichnet, dass** die an einem Kanal verwendete Modulation unter Berücksichtigung einer Qualität Qₙ des Kommunikationskanals chₙ erfolgt.

7. Verfahren nach Anspruch 6, **dadurch gekennzeichnet, dass** die Verbindungsqualität eines Kommunikationskanals geschätzt wird, indem mindestens einer der folgenden Schritte ausgeführt wird:
• eine Messung der Stärke eines empfangenen Signals, bei Nichtvorliegen von Kommunikation, in jedem vom System betrachteten Kanal,
• Zuweisung einer Qualitätsnote an jeden der Kanäle durch Vergleich eines gemessenen Stärkewertes mit einem oder mehreren Schwellenwert(en),
• Auswahl der n Kanäle, welche die höchsten Notenwerte aufweisen.

8. Verfahren nach einem der Ansprüche 6 oder 7, **dadurch gekennzeichnet, dass** die Verbindungsqualität eines Kommunikationskanals auf Höhe des Senders (300) bestimmt wird.

9. Verfahren nach einem der vorhergehenden Ansprüche, **dadurch gekennzeichnet, dass** eine Breite eines Kanals 3 kHz, 6 kHz oder t kHz beträgt, wobei t eine gegebene reelle Zahl ist.

10. Verfahren nach Anspruch 1, **dadurch gekennzeichnet, dass** eine Rahmen in der Norm ST4539 oder der Norm MIL 188-110B definiert ist, und dass das Verfahren den Wert '111' des ersten Tribits des Autobauds verwendet, um dem Empfänger den Betrieb mit erweitertem Autobaud zu signalisieren, und dadurch, dass man 4 zusätzliche Tribits in der Autobaud-Erweiterungspräambel definiert, d. h. 8 Symbole, zum Bilden eines Autobauds mit 137 Symbolen und folglich zum Ergeben des erweiterten Autobauds, wobei die Tribits durch einen Korrekturcode geschützt sind.

11. Verfahren nach einem der Ansprüche 1 bis 10, **dadurch gekennzeichnet, dass** man unterschiedliche codierte Modulationen angesichts eines betrachteten Kanals einsetzt.

12. Breitband-Hochfrequenz-HF-Kommunikationssystem, beinhaltend mindestens einen HF-Sender (300) und mindestens einen HF-Empfänger (320), welche geeignet sind, um ein Signal mit einer HF-Wellenform zu senden und zu empfangen, mindestens n Kommunikationskanäle chₙ, einen Fehlerkorrekturcode (301) und einen Verschachteler (302), welche den n Kanälen gemeinsam sind, ein Modul (312, 313), welches es ermöglicht, eine von jedem der n Kanäle gebotene Kommunikationsqualität zu bestimmen, wobei Daten in Form eines Rahmens übertragen werden, welcher nacheinander eine anfängliche Synchronisationspräambel (401a, 401b) und ein von einem Datenblock (402) gefolgtes Autobaud beinhaltet, wobei das Autobaud durch einen Breitband-Empfänger und durch einen Schmalband-Empfänger erkannt werden kann, wobei das System zudem Folgendes beinhaltet:
∘ wobei der HF-Empfänger (320) Mittel zum Bestimmen von n Frequenzkanälen beinhaltet, auf welchen er ein HF-Signal übertragen wird,
∘ wobei der HF-Empfänger Mittel zum Bewerten einer Übertragungsqualität für jeden Kanal beinhaltet,
∘ wobei der HF-Sender (300) zudem Mittel zum Einbringen, in den Rahmen des übertragenen HF-Signals, nach dem Autobaud, einer Autobaud-Erweiterungspräambel beinhaltet, wobei die Autobaud-Erweiterungspräambel, welche von einem Breitband-Empfänger erkannt werden kann, mindestens folgende Informationen beinhaltet:
∘ eine Information über die an jedem der n Kanäle ch₁, .., chₙ verwendete Modulation,
∘ eine Information über den betrachteten Verschachteler, welcher den n Kanälen gemeinsam ist,
∘ den verwendeten Korrekturcode FEC, der den n Kanälen gemeinsam ist,
∘ die Anzahl an verwendeten Kanälen n sowie für jeden davon eine Kennung idₙ, die es ermöglicht, diese zu ordnen,
wobei das System einen Rückmeldekanal (312) beinhaltet, welche es ermöglicht, die Information über eine Qualität des Kanals an den HF-Sender weiterzuleiten.

## Claims

1. A method for communication in a wideband high frequency HF communication system comprising a transmitter (300) for an HF signal and a receiver HF (320), at least n communication channels chₙ, an FEC error correction code (301) and an interleaver (302) that are common to the n channels, a means (312, 313) allowing determination of the communication quality Qn provided by each of the n channels chₙ, the data being transmitted in the form of a frame successively comprising an initial synchronization preamble (401a, 401b) and an autobaud followed by a block of data (402), said autobaud being recognizable by a narrowband receiver and by a wideband receiver, said method comprising the use of said n channels in parallel, sharing one and the same coder and one and the same interleaver in order to benefit from frequency diversity protection, while allowing the use of different modulations on the n channels and providing redundancy on the information pertaining to coding, interleaving and modulation by channel, said method comprising at least the following steps:
• a step that involves introducing, into the frame of said transmitted HF signal, an autobaud extension preamble after said autobaud, said autobaud extension preamble being recognizable by a wideband receiver comprising at least the following information:
∘ an information about the modulation used on each of the n channels ch₁, .., chₙ,
∘ an information about the interleaver that is considered common to the n channels,
∘ the FEC correction code used, which is common to the n channels,
∘ the number of channels used n, and, for each, an identifier id₁, .., idₙ thereof that allows them to be ordered,
• a step of choosing the modulation (304mn) on a channel n on the basis of the link quality of said channel,
• a common coding and interleaving operation (312, 313) on the n channels.

2. The method according to claim 1, **characterized in that** it has a step that involves inserting the autobaud extension preamble (405) after said autobaud (404) that is itself regularly inserted into the data frame.

3. The method according to claim 1, **characterized in that** said frame comprises a first portion composed of two tribits followed by a mini-probe and a second portion made up of n tribits followed by a mini-probe.

4. The method as according to claim 1, **characterized in that** the information on the modulation used is a bit rate information.

5. The method according to claim 1, **characterized in that** a propagation channel chₖ carries the rate information for the communication channels chₖ and chₖ₊₁[n].

6. The method according to claim 1, **characterized in that** the choice of modulation used on a path is made by taking into account the quality Qₙ of the communication channel chₙ.

7. The method according to claim 6, **characterized in that** the link quality of a communication channel is estimated by executing at least one of the following steps:
• measurement of power of a received signal, in the absence of communication, in each channel considered by the system,
• attribution of a quality grade to each of said channels by comparing a value measured for the power with one or more threshold values,
• selection of the n channels having the highest grade values.

8. The method according to either of claims 6 or 7, **characterized in that** the link quality of a communication channel is determined at the transmitter (300).

9. The method according to one of the preceding claims, **characterized in that** a width of a channel is 3 kHz, 6 kHz or t kHz, t being a given real number.

10. The method according to claim 1, **characterized in that** a frame is defined in the ST4539 standard or the MIL 188-110B standard and **in that** the method uses the value '111' of the first tribit of the autobaud in order to signal extended autobaud operation to the receiver and **in that** four additional tribits are defined in the autobaud extension preamble , ie eight symbols for forming an autobaud of 137 symbols and thus constituting the extended autobaud, said tribits being protected by a correction code.

11. The method according to one of claims 1 to 10, **characterized in that** various coded modulations are used, on the basis of a channel that is under consideration.

12. A wideband high frequency HF communication system having at least one HF transmitter (300) and at least one HF receiver (320) that are configured to transmit and receive a signal having an HF waveform, at least n communication channels chₙ, an error correction code (301) and an interleaver (302) that are common to the n channels, a module (312, 313), allowing determination of a communication quality provided by each of the n channels, the data being transmitted in the form of a frame successively comprising an initial synchronization preamble (401a, 401b) and an autobaud followed by a block of data (402), said autobaud being recognizable by a wideband receiver and by a narrowband receiver, the system further comprising:
∘ said HF receiver (320) has means for determining n frequency channels, on which it will transmit an HF signal,
∘ said HF receiver has means for evaluating a transmission quality of each channel,
∘ said HF transmitter (300) moreover has means for introducing into the frame of said transmitted HF signal, an autobaud extension preamble after said autobaud, said autobaud extension preamble being recognizable by a wideband receiver comprising at least the following information:
∘ an information about the modulation used on each of the n channels ch₁, .., chn,
∘ an information about the interleaver that is considered, which is common to the n channels,
∘ the FEC correction code used, which is common to the n channels,
∘ the number of channels used n, and, for each, an identifier idₙ thereof that allows them to be ordered,
the system comprising a return path (312) allowing the information about the quality of the channel to be sent back up to the HF transmitter.
